Europäisches Patentamt

European Patent Office

Office européen des brevets

(19)

(11) Numéro de publication: **0 096 614**
**B1**

(12) **FASCICULE DE BREVET EUROPEEN**

(45) Date de publication du fascicule du brevet:
**08.01.86**

(21) Numéro de dépôt: **83401033.2**

(22) Date de dépôt: **25.05.83**

(51) Int. Cl.⁴: **C 09 K 3/10,** C 08 L 23/08,
C 08 L 95/00

(54) **Compositions pour produits d'étanchéité et produits ainsi constitués.**

(30) Priorité: **03.06.82 FR 8209631**

(43) Date de publication de la demande:
**21.12.83 Bulletin 83/51**

(45) Mention de la délivrance du brevet:
**08.01.86 Bulletin 86/2**

(84) Etats contractants désignés:
**AT BE CH DE FR GB IT LI LU NL SE**

(56) Documents cités:
**FR - A - 2 228 817**
**FR - A - 2 303 838**

(73) Titulaire: **Société Chimique des Charbonnages S.A., Tour Aurore Place des Reflets, F-92080 Paris La Défense Cédex 5 (FR)**

(72) Inventeur: **Decroix, Jean Claude, Rue de la Forge aux Fers Saint Nicolas les Arras, F-62000 Arras (FR)**

(74) Mandataire: **Dubost, Thierry, SOCIETE CHIMIQUE DES CHARBONNAGES Service Propriété Industrielle B.P. 57, F-62670 Mazingarbe (FR)**

## Description

La présente invention se rapporte à des compositions pour produits d'étanchéité et aux produits ainsi constitués.

L'industrie du bâtiment et des travaux publics et les utilisateurs de produits d'étanchéité sont à la recherche, pour des applications importantes et variées, de matériaux de performances sans cesse plus élevées tant en valeur instantanée qu'après plusieurs années de vieillissement sous l'effet des agents atmosphériques. Ce besoin se fait sentir dans l'application tant au revêtement de toitures qu'au revêtement de tubes dans des travaux de cuvelage ou de drainage.

Pour améliorer les performances de ces produits d'étanchéité généralement constitués à base de bitumes de pénétrabilités comprises entre 80 et 220, on a fait appel à des compositions de bitumes modifiés par l'adjonction de polymères thermoplastiques. Ainsi le brevet américain N° 3249567 décrit des compositions comprenant de 5 à 95% en poids de bitume (en particulier asphalte aromatique d'origine pétrolière) et de 95 à 5% en poids d'un copolymère éthylène/acrylate d'alkyle d'indice de fluidité compris entre 0,01 et 150 et contenant de 2 à 50% en poids d'acrylate. Le brevet français N° 2004317 décrit des compositions comprenant de 0,1 à 75% en poids d'un brai de goudron de houille et de 99,9 à 25% en poids d'un copolymère éthylène/acide carboxylique. Le brevet français N° 2022853 décrit des compositions comprenant de 33 à 80% de bitume et de 20 à 67% d'un homopolymère d'éthylène ou de propylène ou d'un copolymère éthylène/ester vinylique. Le brevet français N° 2228817 décrit une composition comprenant:

a) de 35 à 99% en poids de bitume ayant un indice de pénétration compris entre 1 et 500,

b) de 1 à 15% en poids d'un mélange en granulés comprenant de 50 à 99% en poids d'un terpolymère statistique éthylène-propylène-diène et de 1 à 50% en poids d'une polyoléfine de poids moléculaire moyen compris entre 2000 et 500000, et

c) de 0 à 50% en poids d'une charge minérale, la somme des trois constituants faisant 100% en poids.

Le brevet français N° 2303838 décrit des mélanges constitués de:

a) de 10 à 90% en poids de bitume,

b) de 90 à 10% en poids d'un copolymère d'oléfines et d'esters carboxyliques insaturés, et

c) de 0,1 à 10% en poids d'alcools aliphatiques à chaîne longue contenant au moins 14 atomes de carbone.

Toutefois les meilleurs résultats semblent avoir été obtenus par des compositions de bitumes comprenant de 8 à 15% en poids de copolymères triséquencés styrène-butadiène-styrène (SBS).

Les performances des produits d'étanchéité dont l'amélioration est recherchée sont d'une part la température de ramollissement bille-anneau, la résistance au pliage à froid, le module de rigidité et la recouvrance élastique mesurés avant vieillissement et d'autre part les mêmes propriétés mesurées après vieillissement. En effet un inconvénient non négligeable des compositions de bitumes modifiés par les copolymères SBS réside dans le fait que leurs propriétés se dégradent sensiblement après vieillissement sous l'effet des agents atmosphériques.

Les compositions selon la présente invention comprennent:

A) de 35 à 95% en poids d'au moins un produit de distillation choisi parmi les bitumes et les brais mous, et

B) de 5 à 65% en poids d'un terpolymère d'indice de fluidité compris entre 1 et 10 dg/min et comprenant:

— de 88 à 98,7% en moles de motifs dérivés de l'éthylène, de 1 à 10% en moles de motifs dérivés d'un ester choisi parmi les acrylates et méthacrylates d'alkyle, ledit groupe alkyle ayant de 1 à 6 atomes de carbone et de 0,3 à 3% en moles de motifs dérivés de l'anhydride maléique.

Certains terpolymères utilisés dans le cadre de la présente invention ont été décrits dans le brevet français N° 1323379. Des terpolymères particuliers également utilisables, caractérisés notamment par un indice de polydispersité supérieur à 6, ont été décrits dans la demande de brevet français N° 2498609 au nom de la titulaire. Ils peuvent, le cas échéant, comprendre un quatrième monomère copolymérisable avec les trois premiers, choisi parmi les α-oléfines ayant de 3 à 8 atomes de carbone, les monomaléates d'alkyle et les maléates de dialkyle dont les groupes alkyle ont de 1 à 6 atomes de carbone, l'acétate de vinyle, le monoxyde de carbone, présent à raison de jusqu'à 5% en moles, la proportion de l'éthylène dans le tétrapolymère étant alors diminuée d'autant par rapport à la gamme indiquée ci-dessus.

Le procédé de fabrication de ces derniers terpolymères consiste à copolymériser, en présence d'au moins un initiateur de radicaux libre, un mélange composé de 94 à 99% en poids d'éthylène, de 0,7 à 5% en poids d'ester (méth)acrylique et de 0,2 à 0,9% en poids d'anhydride maléique dans un réacteur maintenu sous une pression de 1000 à 3000 bars et à une température de 170 à 280°C, à détendre puis à séparer le mélange de monomère et du terpolymère formé dans le réacteur, et enfin à recycler vers le réacteur le mélange d'éthylène et de monomères précédemment séparé, le flux recyclé comprenant de 99 à 99,8% d'éthylène et de 0,2 à 1% d'ester (méth)acrylique.

Les produits de distillation utilisés dans le cadre de la présente invention ont de préférence une pénétrabilité comprise entre 40 et 100. Ainsi il est remarquable que les bitumes utiles à la présente invention peuvent avoir, contrairement à ceux utilisés dans des compositions avec des copolymères SBS, une pénétrabilité inférieure à 80 et même inférieure à 60. Les bitumes et brais mous utilisés dans le cadre de la présente invention sont des produits résultants de la distillation de résidus carbochimiques ou pétroliers.

Les compositions selon l'invention sont applicables à la fabrication de produits d'étanchéité généralement sous forme de feuilles. En effet elles peuvent être transformées en feuilles d'étanchéité soit par la technique dite multicouches d'imprégnation, soit par la technique dite monocouche d'extrusion dans une filière plate. Bien entendu les compositions selon l'invention peuvent, avant leur transformation en produits d'étanchéité, être additionnées de produits divers tels que plastifiants, antioxydants, anticryptogamiques, et/ou de charges telles que des poudres minérales très fines.

Les produits d'étanchéité obtenus conformément à l'invention présentent des performances améliorées par rapport à celles des produits de l'art antérieur, notamment en ce qui concerne la température de ramollissement bille-anneau, la résistance au pliage à froid, le module de rigidité et la recouvrance élastique avant et surtout après vieillissement.

Les exemples ci-après sont donnés à titre illustratif.

*Exemples 1 et 2:*
*Fabrication des terpolymères*

On considère un réacteur autoclave cylindrique comprenant trois zones d'un volume de 1 l chacune et équipé d'un agitateur à palettes. Les zones sont séparées par des écrans à soupape. L'éthylène frais comprimé par un premier compresseur alimente la première zone. La seconde zone est alimentée par un mélange homogène d'éthylène, d'anhydride maléique (AM) et d'acrylate d'éthyle (AE). Enfin une solution d'éthyl-2 perhexanoate de terbutyle dans une coupe d'hydrocarbures est injectée dans la troisième zone. Celle-ci constitue donc la seule zone réactionnelle puisqu'elle met en présence les trois comonomères et un initiateur de radicaux libres. On trouvera dans le tableau 1 ci-après d'une part les proportions en poids d'anhydride maléique et d'acrylate d'éthyle par rapport à l'éthylène dans la zone réactionnelle et d'autre part la température dans ladite zone. Le réacteur est maintenu sous une pression de 1 600 bars. Au fond de la troisième zone du réacteur est placée une vanne de détente permettant d'abaisser la pression à 300 bars. Le mélange du polymère fondu d'une part et des monomères gazeux d'autre part, après avoir traversé la vanne de détente, passe dans une trémie séparatrice. Tandis que le polymère est recueilli au fond de la trémie, les monomères sont acheminés, après passage à travers une trémie de dégraissage, vers un second compresseur. D'autre part une solution d'anhydride maléique dans l'acrylate d'éthyle est pompée sous pression et acheminée vers l'entrée d'un homogénéiseur de type Venturi où elle est mélangée au flux des monomères recyclés provenant du second compresseur. A la sortie de ce dispositif Venturi, le mélange des trois monomères est acheminé vers un homogénéiseur en spirale puis transféré à la seconde zone du réacteur.

A la sortie de la trémie séparatrice, le terpolymère fabriqué est analysé par spectrophotométrie infrarouge et les proportions en moles de motifs acrylate d'éthyle et de motifs anhydride maléique sont déterminées et indiquées dans le tableau 1 ci-après. D'autre part l'indice de fluidité du polymère est déterminé selon la norme ASTM D 1238-73 et exprimé en dg/min.

Ensuite on mesure les caractéristiques suivantes du polymère:

— masse volumique $\rho$, exprimée en g/cm$^3$ et déterminée selon la norme ASTM D 2839,
— masse moléculaire moyenne en nombre $M_n$, déterminée par chromatographie de perméation de gel,
— indice de polydispersité, déterminé selon la même méthode et égal au rapport $M_w/M_n$, $M_w$ étant la masse moléculaire moyenne en poids,
— température Vicat, exprimée en degrés Celsius et déterminée selon la norme NF. T 51-012 (1).

Les résultats de ces mesures sont rassemblés dans le tableau II ci-après.

*Tableau I*

| Exemple | T°C | Réacteur | | Polymère | | I.F. |
|---|---|---|---|---|---|---|
| | | % AM | % AE | % AM | % AE | |
| 1 | 170 | 0,3 | 4,0 | 0,9 | 6,1 | 7,1 |
| 2 | 180 | 0,3 | 3,5 | 1,0 | 4,7 | 8,2 |

*Tableau II*

| Exemple | $\rho$ | $M_n$ | $M_w/M_n$ | T° Vicat |
|---|---|---|---|---|
| 1 | 0,942 | 19.000 | 6,1 | 48 |
| 2 | 0,942 | 15.500 | 9,0 | 51 |

*Exemples 3 (comparatif) et 4:*

On prépare une feuille d'étanchéité à partir d'un mélange comprenant, en poids, 10 parties d'un polymère thermoplastique, 60 parties d'un bitume de pénétrabilité moyenne à 25°C comprise entre 80 et 100, et 30 parties d'une poudre d'ardoise.

Dans l'exemple 3 (comparatif) le polymère thermoplastique est un copolymère triséquencé styrène-butadiène-styrène tandis que dans l'exemple 4 le polymère thermoplastique est le terpolymère de l'exemple 1 ci-dessus.

On mesure ensuite, sur les produits ainsi obtenus, avant et après vieillissement, les propriétés suivantes:

— température de ramollissement bille-anneau (TAB), exprimée en °C et déterminée selon la norme NF T 66008,

— la résistance au pliage à froid (RPF), déterminée par enroulement de la feuille autour d'un mandrin de 10 mm de diamètre et mesurée par la température (exprimée en °C) à partir de laquelle la feuille se déchire ou se fissure,

— le module de rigidité (MR) à 25°C, exprimé en newtons/cm²,

— la recouvrance élastique (RE), exprimée en pour-cent.

Les propriétés après vieillissement sont mesurées sur les produits placés pendant 1 mois dans une étuve ventilée à 70°C.

Les résultats de ces mesures sont rassemblés dans le tableau III ci-après.

*Exemple 5:*

On prépare une feuille d'étanchéité à partir d'un mélange comprenant, en poids, 5 parties du terpolymère de l'exemple 1, 65 parties du bitume utilisé aux exemples 3 et 4 et 30 parties de la même poudre d'ardoise. Sur le produit ainsi obtenu on mesure, avant et après vieillissement, les propriétés indiquées précédemment. Leurs résultats sont rassemblés dans le tableau III ci-après.

*Tableau III*

| Exemple | avant vieillissement | | | | après vieillissement | | | |
|---|---|---|---|---|---|---|---|---|
| | TBA | RPF | MR | RE | TBA | RPF | MR | RE |
| 3 | 118 | −30 | 55 | 180 | 111 | −25 | 55 | 115 |
| 4 | 125 | −18 | 60 | 230 | 124 | −18 | 60 | 230 |
| 5 | 108 | − 8 | 45 | 190 | 108 | −10 | 45 | 190 |

*Exemples 6 et 7:*

On extrude dans une filière plate, en vue de former une feuille d'étanchéité, des mélanges comprenant X parties du terpolymère de l'exemple 2 et 100−X parties d'un bitume de pénétrabilité moyenne à 25°C comprise entre 40 et 50.

On mesure ensuite, sur les produits ainsi obtenus, avant et après vieillissement, l'allongement à la rupture exprimé en pour-cent et déterminé selon la norme ASTM D 882-67.

Les propriétés après vieillissement sont mesurées sur les produits placés pendant 1 mois dans une étuve ventilée à 80°C. La valeur de X ainsi que les résultats de ces mesures sont rassemblés dans le tableau IV ci-après.

*Tableau IV*

| Exemple | X | allongement à la rupture | |
|---|---|---|---|
| | | avant vieil. | après vieil. |
| 6 | 50 | 850 | 650 |
| 7 | 60 | 950 | 720 |

## Revendications

1. Composition pour produits d'étanchéité, caractérisée en ce qu'elle comprend:

A) de 35 à 95% en poids d'au moins un produit de distillation choisi parmi les bitumes et les brais mous, et

B) de 5 à 65% en poids d'un terpolymère d'indice de fluidité compris entre 1 et 10 dg/min et comprenant:

— de 88 à 98,7% en moles de motifs dérivés de l'éthylène, de 1 à 10% en moles de motifs dérivés d'un ester choisi parmi les acrylates et méthacrylates d'alkyle, ledit groupe alkyle ayant de 1 à 6 atomes de carbone et de 0,3 à 3% en moles de motifs dérivés de l'anhydride maléique.

2. Composition selon la revendication 1, caractérisée en ce que le terpolymère (B) a un indice de polydispersité supérieur à 6.

3. Composition selon l'une des revendications 1 ou 2, caractérisée en ce que le terpolymère comprend en outre un quatrième monomère copolymérisable avec les trois premiers, choisi parmi les α-oléfines ayant de 3 à 8 atomes de carbone, les monomaléates d'alkyle et les maléates de dialkyle dont les groupes alkyle ont de 1 à 6 atomes de carbone, l'acétate de vinyle, le monoxyde de carbone, présent à raison de jusqu'à 5% en moles.

4. Composition selon l'une des revendications 1 à 3, caractérisée en ce que le produit de distillation (A) a une pénétrabilité comprise entre 40 et 100.

5. Produits d'étanchéité, caractérisés en ce qu'ils sont obtenus à partir d'une composition selon l'une des revendications 1 à 4.

6. Produits d'étanchéité selon la revendication 5, caractérisés en ce qu'ils ont la forme de feuilles.

7. Produits d'étanchéité selon la revendication 6, caractérisés en ce qu'ils sont obtenus par extrusion de ladite composition dans une filière plate.

8. Produits d'étanchéité selon la revendication 6, caractérisés en ce qu'ils sont obtenus par imprégnation de ladite composition.

## Patentansprüche

1. Zusammensetzung für Dichtungsprodukte, dadurch gekennzeichnet, dass sie enthält:

A) 35 bis 95 Gew.-% mindestens eines Destillationsproduktes, das ausgewählt ist aus den Bitumen und den Weichpechen, und

B) 5 bis 65 Gew.-% eines Terpolymers mit einem Fliessindex zwischen 1 und 10 dg/min, welches enthält:

— 88 bis 98,7 Mol-% an von Äthylen abstammenden Einheiten, 1 bis 10 Mol-% an von einem Ester abstammenden Einheiten, welcher Ester ausgewählt ist aus der Gruppe bestehend aus den Alkylacrylaten und -methacrylaten, wobei die genannte Alkylgruppe 1 bis 6 Kohlenstoffatome besitzt, und 0,3 bis 3 Mol-% an von Maleinsäureanhydrid abstammenden Einheiten.

2. Zusammensetzung nach Anspruch 1, dadurch gekennzeichnet, dass das Terpolymer (B) eine Polydispersitätszahl über 6 besitzt.

3. Zusammensetzung nach Anspruch 1 oder 2, dadurch gekennzeichnet, dass das Terpolymer weiters ein mit den drei erstenMonomeren copolymerisierbares viertes Monomer enthält, das ausgewählt ist aus der Gruppe bestehend aus den α-Olefinen mit 3 bis 8 Kohlenstoffatomen, den Alkylmonomaleaten und den Dialkylmaleaten, deren Alkylgruppen 1 bis 6 Kohlenstoffatome besitzen, Vinylacetat und Kohlenmonoxid und in einer Menge bis zu 5 Mol-% vorliegt.

4. Zusammensetzung nach einem der Ansprüche 1 bis 3, dadurch gekennzeichnet, dass das Destillationsprodukt (A) eine Penetrationsfähigkeit zwischen 40 und 100 besitzt.

5. Dichtungsprodukte, dadurch gekennzeichnet, dass sie aus einer Zusammensetzung nach einem der Ansprüche 1 bis 4 erhalten wurden.

6. Dichtungsprodukte nach Anspruch 5, dadurch gekennzeichnet, dass sie in Form von Folien vorliegen.

7. Dichtungsprodukte nach Anspruch 6, dadurch gekennzeichnet, dass sie durch Extrudieren der genannten Zusammensetzung durch eine Breitschlitzdüse erhalten wurden.

8. Dichtungsprodukte nach Anspruch 6, dadurch gekennzeichnet, dass sie durch Imprägnieren mit der genannten Zusammensetzung erhalten wurden.

## Claims

1. Composition for sealing products, characterized in that it comprises:

(A) from 35 to 95% by weight of at least one distillation product selected from bitumens and soft pitches, and

(B) from 5 to 65% by weight of a terpolymer having a melt index between 1 and 10 dg/min and comprising from 88 to 98.7 mole percent of units derived from ethylene, from 1 to 10 mole percent of units derived from an ester selected from alkyl acrylates and methacrylates, the said alkyl group having from 1 to 6 carbon atoms, and from 0.3 to 3 mole percent of units derived from maleic anhydride.

2. Composition according to Claim 1, characterized in that the terpolymer (B) has a polydispersity index above 6.

3. Composition according to one of Claims 1 or 2, characterized in that the terpolymer further comprises a fourth monomer copolymerizable with the first three monomers and selected from α-olefins having from 3 to 8 carbon atoms, monoalkyl maleates and dialkyl maleates in which the alkyl groups have from 1 to 6 carbon atoms, vinyl acetate and carbon monoxide, present in an amount of up to 5 mole percent.

4. Composition according to one of Claims 1 to 3, characterized in that the distillation product (A) has a penetrability between 40 and 100.

5. Sealing products, characterized in that they are obtained from a composition according to one of Claims 1 to 4.

6. Sealing products according to Claim 5, characterized in that they are in the form of sheets.

7. Sealing products according to Claim 6, characterized in that they are obtained by extrusion of the said composition through a flat die.

8. Sealing products according to Claim 6, characterized in that they are obtained by impregnation of the said composition.